(19) **Europäisches Patentamt**
**European Patent Office**
**Office européen des brevets**

(11) **EP 1 142 450 B1**

(12) **EUROPÄISCHE PATENTSCHRIFT**

(45) Veröffentlichungstag und Bekanntmachung des Hinweises auf die Patenterteilung:
**26.03.2003 Patentblatt 2003/13**

(21) Anmeldenummer: **99968809.6**

(22) Anmeldetag: **29.12.1999**

(51) Int Cl.⁷: **H04R 25/00**, H04R 3/00

(86) Internationale Anmeldenummer:
**PCT/EP99/10474**

(87) Internationale Veröffentlichungsnummer:
**WO 00/042814 (20.07.2000 Gazette 2000/29)**

(54) **VERFAHREN UND GERÄT ZUR ADAPTIVEN MERKMALSÄNDERUNG BEI EINDIMENSIONALEN SIGNALEN**

METHOD AND DEVICE FOR ADAPTIVELY MODIFYING THE CHARACTERISTICS OF ONE-DIMENSIONAL SIGNALS

PROCEDE ET APPAREIL DE MODIFICATION ADAPTATIVE DE CARACTERISTIQUES DANS DES SIGNAUX A UNE DIMENSION

(84) Benannte Vertragsstaaten:
**CH DE DK LI**

(30) Priorität: **14.01.1999 DE 19901228**

(43) Veröffentlichungstag der Anmeldung:
**10.10.2001 Patentblatt 2001/41**

(73) Patentinhaber:
• **Siemens Audiologische Technik GmbH**
**91058 Erlangen (DE)**
• **Rass, Uwe**
**90480 Nürnberg (DE)**
• **Steeger, Gerhard**
**91056 Erlangen (DE)**

(72) Erfinder:
• **RASS, Uwe**
**D-90480 Nürnberg (DE)**
• **STEEGER, Gerhard**
**D-91056 Erlangen (DE)**

(74) Vertreter: **Berg, Peter, Dipl.-Ing. et al**
**Siemens AG**
**Postfach 22 16 34**
**80506 München (DE)**

(56) Entgegenhaltungen:
EP-A- 0 535 893          US-A- 4 446 530
US-A- 5 073 964          US-A- 5 539 412
US-A- 5 732 386

• PRABHU K M M ET AL: "Fast Hartley transform implementation on DSP chips" MICROPROCESSORS AND MICROSYSTEMS,GB,IPC BUSINESS PRESS LTD. LONDON, Bd. 20, Nr. 4, 1. Juni 1996 (1996-06-01), Seiten 233-240, XP004032628 MADRAS ISSN: 0141-9331

**Beschreibung**

Die Erfindung betrifft ein Signalverarbeitungsverfahren gemäß dem Oberbegriff des Patentanspruchs 1 sowie ein Gerät zur Realisierung dieses Verfahrens, welches gemäß einem der Ansprüche 14 bis 17 ausgebildet ist.

In der Technik müssen informationstragende zeitliche Verläufe einzelner physikalischer Größen (z.B. Schalldruckschwankungen bei einem akustischen Signal) häufig nicht nur verstärkt, sondern auch in ihren Eigenschaften verändert werden. Solche Verläufe werden als eindimensionale Signale bezeichnet. Die angestrebte Veränderung der Eigenschaften solcher Signale wird hier verallgemeinernd als Merkmalsänderung bezeichnet. Wegen der damit verbundenen praktischen Vorteile erfolgt diese Merkmalsänderung heute in der Regel mit elektronischen Mitteln. Dies erfordert, daß das in seinen Merkmalen zu verändernde Signal eine elektrische Spannungsschwankung darstellt. Es wird durch einen geeigneren Wandler in eine solche Spannungsschwankung umgewandelt (z.B. durch ein Mikrofon bei einem akustischen Signal). Nach der Merkmalsänderung ist das Signal häufig wieder in die ursprüngliche physikalische Darstellungsform zurückzuwandeln, wofür ein geeigneter Wandler erforderlich ist (z.B. Lautsprecher bei einem akustischen Signal). Häufig werden für die Merkmalsänderung digitale Verfahren verwendet, weil diese eine Reihe wohlbekannter Vorteile aufweisen.

Oft wird eine dem Prinzip nach bekannte und als frequenzselektive Filterung bezeichnete Merkmalsänderung angewandt. Hierbei werden gewisse Teile des Signalspektrums hervorgehoben, andere abgeschwächt. Eine weitere vorbekannte Gruppe von Merkmalsänderungen wird als Optimalfilterung oder störungsreduzierende Filterung bezeichnet. Hierbei geht es darum, Anteile des Signals, welche von Störquellen oder unerwünschten Signalpfaden (z.B. akustischen Rückkopplungspfaden) herrühren, zu erkennen und derartig vom Signal abzutrennen, daß das gewünschte Nutzsignal möglichst unverfälscht zurückgewonnen wird. Eine weitere bekannte Gruppe von Merkmalsänderungen wird als Kompression bezeichnet. Hierbei sind die Signalamplituden in Abbängigkeit von ihrer momentanen Intensität mehr oder weniger abzuschwächen. Beispiele sind die Übertragung eines Signals hoher Dynamik über einen Rundfunkkanal mit begrenztem Modulationshub oder die Anpassung eines Sprachsignals an den verminderten Dynamikbereich eines geschädigten Gehörs mittels eines geeigneten Hörgeräts, wie z.B. im US-Patent 3894195 (K.D. Kryter) beschrieben. Eine weitere Form von Merkmalsänderungen ist die als Preemphasis bekannte vorübergehende Anhebung bestimmter Signalanteile, mit dem Ziel, das Signal robuster gegen den Einfluß von Störungseintragungen in einem Übertragungskanal zu machen.

Schließlich ist auch die als Präsenz bezeichnete Anhebung bestimmter Anteile eines Signals, mit dem Ziel, beim Hörer die Empfindung eines besonderen Wohlklangs hervorzurufen, als Merkmalsänderung im oben genannten Sinne anzusehen.

Wenn die Umgebungsbedingungen wechseln, ist der gewünschte Verarbeitungserfolg oft nur dann in optimaler Weise zu erzielen bzw. aufrechtzuerhalten, wenn die beschriebenen Merkmalsänderungen zeitvariant ihre Charakteristik ändern, sich also an die wechselnden Umgebungsbedingungen adaptieren. Zahlreiche Strategien zur Adaptation der beschriebenen Merkmalsänderungen sind bekannt. Diese sind nicht Gegenstand dieser Erfindung, wohl aber deren unvermeidbarer Einfluß auf die Qualität der Verarbeitung.

Für die Durchführung der beschriebenen Merkmalsänderungen hat sich das von J.B. Allen und L. Rabiner in "A unified approach to short-time Fourier analysis and synthesis", erschienen in Proc. of the IEEE, Band 65, 1977, Seiten 1558-1564, angegebene adaptive "Overlap-Add"-Verfahren besonders bewährt. Der Rechenaufwand des Verfahrens ist auch dann noch gering, wenn sehr komplexe Merkmalsänderungen erforderlich sind. Außerdem wird vom "Overlap-Add"-Verfahren die (hier nicht im Detail beschriebene) Adaptation an wechselnde Umweltbedingungen dadurch unterstützt, daß es die Berechnung von Kurzzeit-Schätzwerten des Signalspektrums, welche hohe statistische Sicherheit aufweisen, bereits beinhaltet. Beim "Overlap-Add"-Verfahren wird das im Analog-Digital-Umsetzer digitalisierte Eingangssignal fortlaufend in Blöcke mit gleicher Anzahl M von Abtastwerten unterteilt, die einander überlappen. Jeder Block wird mit einem geeigneten Fenster multipliziert, um die Schätzgenauigkeit der anschließenden Transformation zu maximieren. Aus jedem Block wird mittels einer schnellen Fourier-Transformation ("Fast Fourier Transform", abgekürzt FFT) ein Schätzwert für das Spektrum dieses Abschnitts errechnet, wobei die Transformationslänge N größer als die Blocklänge M sein muß, wie nachstehend noch begründet wird. Die Merkmalsänderung erfolgt dadurch, daß die N Spektralwerte jedes Datenblocks mit geeignet gewählten Bewertungsfaktoren multipliziert werden. Die Rücktransformation ("Inverse Fast Fourier Transform", abgekürzt IFFT) liefert einen Bock des modifizierten Ausgangssignals. Nach der Überlagerung aufeinanderfolgender Blöcke kann das nun wieder fortlaufende Ausgangssignal weiterverwendet (also z.B. auch in die ursprüngliche physikalische Darstellungsform zurückgewandelt) werden.

Als nachteilig hat sich jedoch erwiesen, daß das Ausgangssignal sehr häufig mit Fehlern behaftet ist, welche bei der IFFT der bewerteten Spektren entstehen. Es ist bekannt, daß die IFFT von N Werten eines Spektrums die Grundperiode, ebenfalls der Länge N, einer periodischen Zeitfolge liefert (siehe z.B. A.V. Oppenheim, R.W. Schafer: Zeitdiskrete Signalverarbeitung, München: Oldenbourg, 1995). Wurde das Spektrum durch eine FFT derselben Länge N aus einem Zeitsignal erzeugt, dann entspricht das Ergebnis der IFFT genau dem Eingangssignal. Wurde dagegen das Spektrum wie oben beschrieben mulitplikativ bewertet, dann entspricht dies einer Faltung mit einer Filter-Impulsantwort (von i.

a. unbekannter Länge L) im Zeitbereich. Das Ergebnis einer solchen Operation hat bekanntermaßen eine Länge, die fast der Summe aus Eingangssignal-Blocklänge M und der Länge L der Impulsantwort entspricht. Die nach der IFFT zur Rekonstruktion des Ausgangssignals benutzte Grundperiode der Länge N ist dann aber ein Ausschnitt aus einer additiven Überlagerung von unendlich vielen jeweils um N Abtastwerte verschobenen Wiederholungen des zu langen Faltungsergebnisses (sog. zirkulare Faltung), wie ebenfalls in dem o.g. Buch von Oppenheim und Schafer erläutert wird. Diese verschoben überlagerten Signalwerte werden als Fehler im Ausgangssignal hörbar (sog. "Time domain aliasing"). Um diese Fehler wenigstens zu verkleinern wurde bisher vorgeschlagen, die Länge von FFT und IFFT wesentlich größer zu wählen als die Eingangssignal-Blocklänge M, um möglichst wenige Überlagerungen innerhalb der Grundperiode der Länge N zu erhalten. Dadurch wird der Rechenaufwand drastisch erhöht, ohne daß eine sichere Fehlerbegrenzung möglich wird. Auch die Anwendung eines weiteren Fensters auf die von der IFFT gelieferten Ausgangsdatenblöcke, die bereits versucht wurde, erlaubt keine sichere Fehlerbegrenzung, führt andererseits aber zu weiteren Signalverfälschungen.

Sicher vermeiden lassen sich die Fehler dadurch, daß die Länge L der Filterimpulsantwort, die den Bewertungsfaktoren entspricht, geeignet begrenzt wird. Nachdem aber bei sehr vielen adaptiven Merkmalsänderungsverfahren diese Bewertungsfaktoren nur im Frequenzbereich geliefert und fortlaufend angepaßt werden, wäre nach jeder Änderung ein Filter-Entwurfsverfahren, z.B. nach der Strategie des "Frequency-Sampling" (siehe z.B. das o.g. Buch von Oppenheim und Schafer), durchzuführen. Dieses erforderte viel Rechenzeit, würde somit die fortlaufende Verarbeitung unterbrechen und die Echtzeitanwendung der meisten der o.g. Merkmalsänderungsverfahren unmöglich machen.

Die Erfindung löst diese Probleme dadurch, daß in das adaptive "Overlap-Add"-Verfahren der im kennzeichnenden Teil des Anspruchs 1 beschriebene Zusatzalgorithmus eingebracht wird, der es erlaubt, die "Time-domain-aliasing"-Fehler sicher unter einem wählbaren Grenzwert zu halten. Der Rechenaufwand für diesen Zusatzalgorithmus ist gering, er macht in den meisten Fällen nur einen kleinen Bruchteil des für das "Overlap-Add"-Verfahren ohnehin nötigen Aufwandes aus. Des weiteren hat es sich als vorteilhaft erwiesen, daß der Rechenaufwand des erfindungsgemäßen Zusatzalgorithmus' abnimmt, wenn größere Fehler zugelassen werden. Dadurch kann für jede Anwendung ein optimaler Kompromiß zwischen Rechenaufwand und Qualität des Ausgangssignals gefunden werden. Das Konzept und die Anwendung des erfindungsgemäßen Fehlerbegrenzungsverfahrens werden nachstehend anhand der Figuren beispielhaft erläutert, ohne daß dadurch andere, für fachkundige Personen naheliegende Ausführungsformen ausgeschlossen oder eingeschränkt werden sollen.

Es zeigen

Fig. 1: das Blockschaltbild eines Verfahrens zur Merkmalsänderung gemäß dem herkömmlichen, im Oberbegriff des Anspruchs 1 beschriebenen Stand der Technik.

Fig. 2: ein beispielhaftes Schema zur Rekonstruktion des Ausgangssignals durch überlappende Addition von Signalabschnitten.

Fig. 3: das Blockschaltbild eines erfindungsgemäßen Verfahrens zur Merkmalsänderung.

Fig. 4: die erfindungsgemäßen Schieberegister **131** und **134** mit eingetragenen beispielhaften Frequenzgang- und Fensterfolgen.

Fig. 5: das Ergebnis der Rücktransformation der in der Fig.4 dargestellten Fensterfunktion in den Zeitbereich.

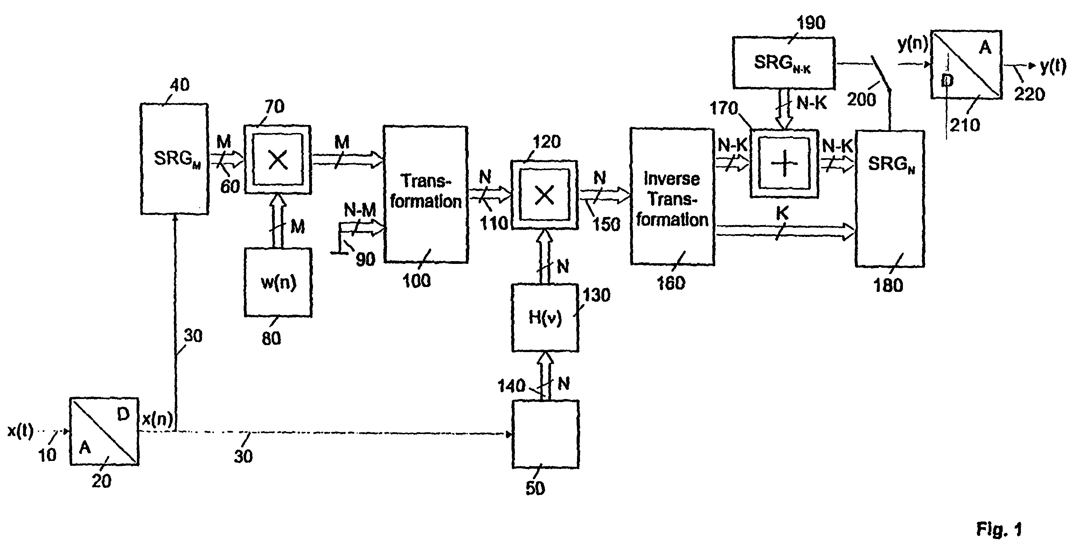

Die **Fig. 1** zeigt das Blockschaltbild eines Gerätes zur Merkmalsänderung, welches dem im Oberbegriff des Anspruchs 1 beschriebenen Stand der Technik entspricht. Dabei wird angenommen, daß das Eingangssignal x(t), welches über die Leitung **10** an den Analog-Digital-Wandler **20** herangeführt wird, einen kontinuierlichen elektrischen Spannungsverlauf über der Zeit t darstellt. In bestimmten Anwendungsfällen wurde dieses Signal durch einen geeigneten Wandler (z.B. Mikrofon) aus dem Verlauf einer anderen physikalischen Größe (z.B. Schalldruck) in bekannter Weise erzeugt. Der Block **20** (Analog-Digital-Wandler) beinhaltet auch die Abtast-Halte-Funktion, wenn eine solche für das Wandlungsverfahren erforderlich ist. Dabei wird angenommen, daß die Werte mit genügender Genauigkeit, d. h. genügender Anzahl Bits je Wert x(n), quantisiert werden. Über die Leitung **30** wird somit eine zeitliche Folge x(n) digitalisierter Abtastwerte des Eingangssignals an das Schieberegister **40** und an die Verarbeitungseinheit **50,** welche die Adaptationsstrategie realisiert, herangeführt. Dabei stellt n den Zählindex der aufeinanderfolgenden Abtastintervalle dar. Die Übertragung kann wahlweise parallel oder bitseriell erfolgen; dies ist für das hier zu erläuternde Verarbeitungsverfahren unerheblich. Im Schieberegister **40** werden M Abtastwerte x(n) aufbewahrt. Wird ein neuer Wert eingelesen, so wird der älteste gespeicherte Wert hinausgeschoben und geht verloren. Sind K neue Werte eingelesen, beginnt ein Verarbeitungszyklus. M muß ein ganzzahliges Vielfaches von K sein, M=K ist möglich, aber unzweckmäßig. Dem Schieberegister **40** werden M Abtastwerte entnommen und über die Leitung **60** einer Multipliziereranordnung **70** zugeführt. Die Leitung **60** ist als Bandleitung aus M parallelen Einzelleitungen dargestellt, um zu symbolisieren, daß in jeweils einem Verarbeitungsschritt ein Block von M Abtastwerten bearbeitet wird. In der Multipiziereranordnung **70** wird jeder Eingangswert mit je einem Wert einer Fensterfunktion w(n) multipliziert, die in einem Speicher 80 bereitgehalten wird. Der Block 70 kann M parallel arbeitende Multiplizierer enthalten. Es kann aber auch ein Multiplizierer genügen, wenn er schnell genug ist, um innerhalb von K Abtastintervallen M Multiplikationen in Zeitmultiplex-Technik abzuarbeiten. Die Fensterfunktion w(n) muß so gewählt werden, daß sie bei Verschiebung um Vielfache von K und Aufaddition eine konstante Folge liefert, wie in der genannten Veröffentlichung von Allen und Rabiner näher erläutert wird.

Die M fensterbewerteten Eingangsdaten werden ergänzt durch N-M Nullwerte, was durch die Anordnung **90** symbolisiert wird. Der so entstandene Datenblock aus N Werten wird einer diskreten Spektraltransformation **100** zugeführt. Allen und Rabiner haben hierfür die diskrete Fouriertransformation, in der recheneffizienten Ausführungsform der "Fast Fourier Transform" (FFT) vorgeschlagen. Alternative Realisierungsmöglichkeiten für die Spektraltransformation **100** sind in den Ansprüchen 5 bis 8 angegeben. Die Spektraltransformation liefert ein Spektrum X(v) aus N diskreten, in vielen Fällen komplexen Werten, welches über die Leitung **110** einer Multipliziereranordnung **120** zugeführt wird. Dort erfolgt die Merkmalsänderung, indem jeder Wert X(v) mit einem Wert der im Speicher **130** bereitgehaltenen Frequenzgangfunktion H(v) multipliziert wird. Es ergibt sich ein diskretes Ausgangsspektrum.

$$Y(v) = X(v) \cdot H(v) \qquad \text{für } v = 0, 1, 2, \ldots, N\text{-}1. \qquad (1)$$

Die durch den Block **50** symbolisierte Adaptationsstrategie ändert von Zeit zu Zeit einzelne oder alle Werte von H(n) im Speicher **130** über die Leitung **140**, abhängig von Veränderungen im Eingangssignal x(n). Weil die Adaptationsstrategie nicht Gegenstand der vorliegenden Erfindung ist, wird diese hier nicht näher beschrieben.

Das Ausgangsspektrum Y(n) wird über die Leitung **150** einer inversen Spektraltransformation **160** zugeführt, welche die Umkehrung der im Block **100** verwendeten Transformation darstellt, so daß N digitale Abtastwerte $y_i(n)$ eines Zeitbereichssignals errechnet werden. Dabei bezeichnet i den laufenden Index der Verarbeitungsschritte. Wie oben beschrieben, werden in jedem Verarbeitungsschritt aus dem Schieberegister **40** nur K neue Abtastwerte, aber M-K ältere Abtastwerte, welche bereits einmal oder sogar mehrmals in früheren Verarbeitungsschritten verwendet wurden, der Verarbeitung zugeführt. Die Verarbeitung erfolgt also in überlappenden Datenabschnitten. Dementsprechend ergibt sich am Ausgang die endgültige Ergebnisfunktion y(n) durch zeitverschobenes Aufaddieren mehrerer Signalabschnitte $y_i(n)$. Dies wird durch die Addiereranordnung **170**, die beiden Schieberegister **180** und **190** sowie den Umschalter **200** bewirkt. Die Addiereranordnung **170** führt in jedem Verarbeitungsschritt N-K Additionen aus. Dabei ist es gleichgültig, ob N-K parallele Addierer realisiert sind oder ob ein schneller Addierer die Additionen im Zeitmultiplexverfahren abarbeitet. Die Ergebnisse der Additionen und die K neuesten, noch nicht der Addition unterworfenen Ergebniswerte werden parallel ins Schieberegister **180** eingespeichert und dann seriell nach oben herausgeschoben. Dabei ist der Umschalter **200** zunächst nach rechts gelegt, so daß die K ältesten im Schieberegister **180** gespeicherten Werte dem Digital-Analog-Wandler **210** zugeführt werden und somit einen Teil der Ausgangsfolge y(n) bilden. Dann wird der Umschalter **200** nach links umgeschaltet und die restlichen N-K Werte werden ins Schieberegister **190** umgespeichert, so daß diese für weitere Additionen zur Verfügung stehen.

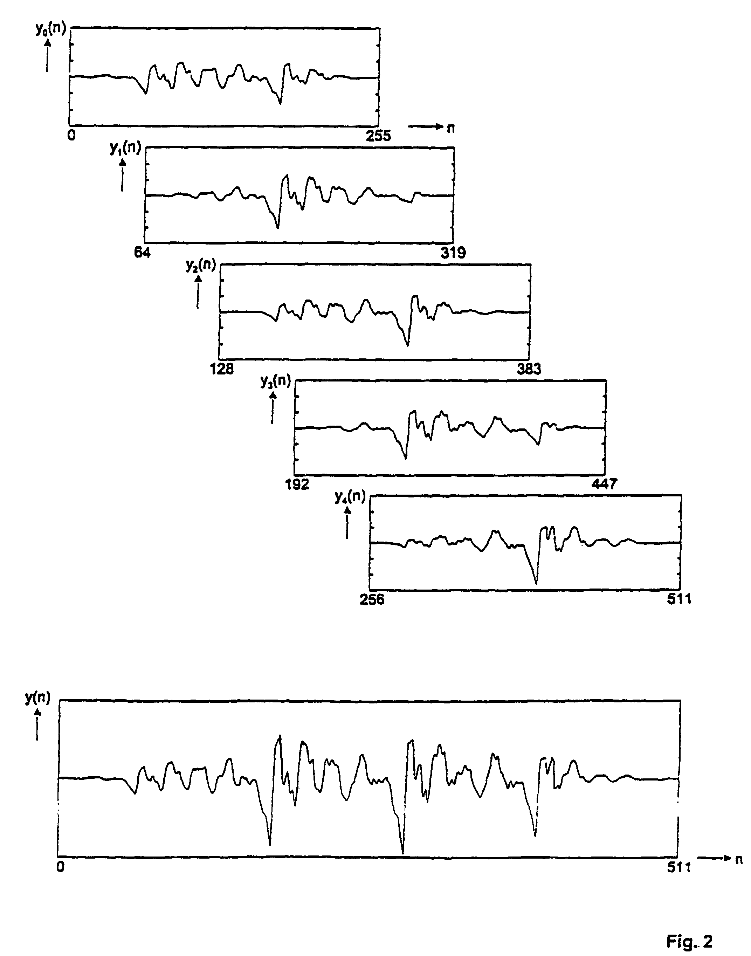

Die **Fig. 2** zeigt für die beispielhaften Werte N=256 und K=64 die zeitverschobene und überlappende Aufaddition der Signalabschnitte $y_i(n)$, i=0,1,2,..., zur Ausgangsfolge y(n). Dabei sind untereinanderstehende Werte der Teilfolgen $y_i(n)$ zu addieren.

Der in der **Fig. 1** dargestellte Digital-Analog-Wandler **210** erzeugt aus y(n) ein kontinuierliches elektrisches Ausgangssignal y(t). Dieses kann über die Leitung **220** einer Weiterbearbeitung zugeführt werden, beispielsweise auch einer Umwandlung in eine andere physikalische Darstellungsform.

Die in der Fig. 1 dargestellte Verarbeitung erfolgt aber nur dann frei von "Time-domain-aliasing"-Fehlern, wenn zu der im Speicher **130** vorhandenen Frequenzgangfunktion H(v) im Zeitbereich eine Impulsantwort h(n) gehört, welche nicht mehr als L von Null verschiedene Werte aufweist und wenn L die Bedingung

$$L \leq N\text{-}M+1 \qquad (2)$$

erfüllt. Wenn die Adaptationsstrategie **50** fortlaufend neue Frequenzgangfunktionen H(v) bereitstellt, ist die Überprüfung der Bedingung (2) so aufwendig, daß Echtzeitverarbeitung im allgemeinen nicht mehr möglich ist, wie oben bereits dargelegt wurde.

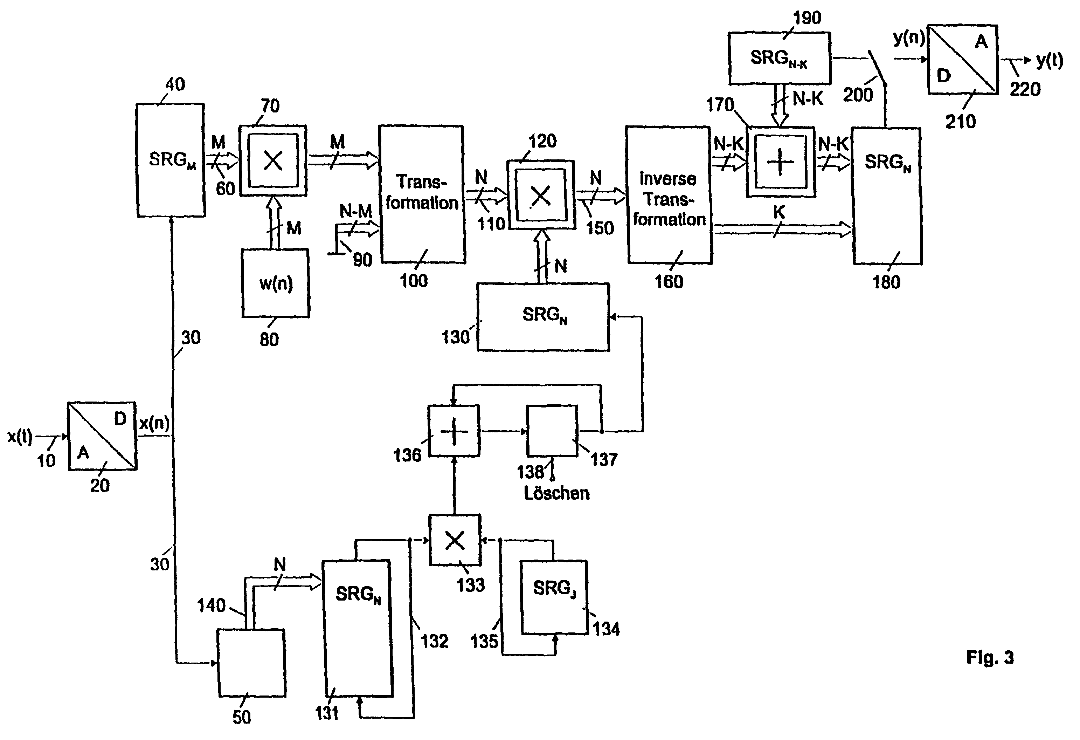

Die **Fig. 3** zeigt das Blockschaltbild eines Gerätes zur Merkmalsänderung, welches gemäß dem kennzeichnenden Teil des Anspruchs 1 ausgebildet ist. Die **Fig. 3** unterscheidet sich von der **Fig.** 1 dadurch, daß die Frequenzgangfunktion H(v) nach ihrer Festlegung durch die Adaptationsstrategie **50** über die Leitung **140** zunächst parallel in ein Schieberegister **131** der Länge N eingelesen wird. Die Ausgangswerte des Schieberegisters **131** werden beim Schieben über die Rückführleitung **132** in die Eingangszelle desselben Schieberegisters zurückgespeichert und außerdem dem Multiplizierer **133** zugeführt. Ein weiteres Schieberegister **134** enthält eine geeignete Fensterfunktion G(v) mit einer im allgemeinen kurzen Gesamtlänge J. Werden die Werte G(v) nach oben aus dem Schieberegister **134** hinausgeschoben, so werden diese über die Rückführleitung **135** in die Eingangszelle desselben Schieberegisters **134** zurückgespeichert. Der Multiplizierer **133** multipliziert die jeweils an den Ausgängen der Schieberegister **131** und **134** anstehenden Werte und führt das Produkt einem Addierer **136** zu. Dieser addiert hierzu den am Ausgang des Speichers **137** stehenden Wert und überschreibt mit der Summe den bisherigen Wert im Speicher **137.** Addierer **136** und Speicher **137** realisieren also einen Akkumulator. Soll eine neue Akkumulation begonnen werden, muß vorher der Speicher **137** gelöscht werden, was durch die Leitung **138** symbolisiert wird. Es ist aus der Literatur, z.B. dem Buch "Digitale Signalverarbeitung", Band 1, von H.W. Schüßler, erschienen im Springer-Verlag, Berlin (4. Auflage, 1994), bekannt, daß die aus den Schieberegistern **131** und **134,** dem Multiplizierer **133** dem Addierer **136** und dem Speicher **137** gebildeten Anordnung ein nichtrekursives digitales Filter realisiert. Dieses führt die zirkulare Faltungsoperation durch, sofern die im Schieberegister **134** enthaltene diskrete Funktion in umgekehrter Richtung eingespeichert wurde. Letzteres ist hier nicht erforderlich, weil stets nur mit einer Fensterfunktion gefaltet wird, welche eine symmetrische Folge darstellt. Nachdem hier die Länge J der Fensterfunktion G(v) im allgemeinen wesentlich geringer ist als die Länge N des Frequenzgangs H(v), ergibt sich folgender Ablauf der Faltung: Die Fensterfunktion G(v) ist um B Werte des Frequenzindex v verschoben im Schieberegister **134** abgespeichert, wobei

$$B = \begin{cases} \frac{J}{2} & \text{bei geradem } J \\ \frac{J-1}{2} & \text{bei ungeradem } J \end{cases} \tag{3}$$

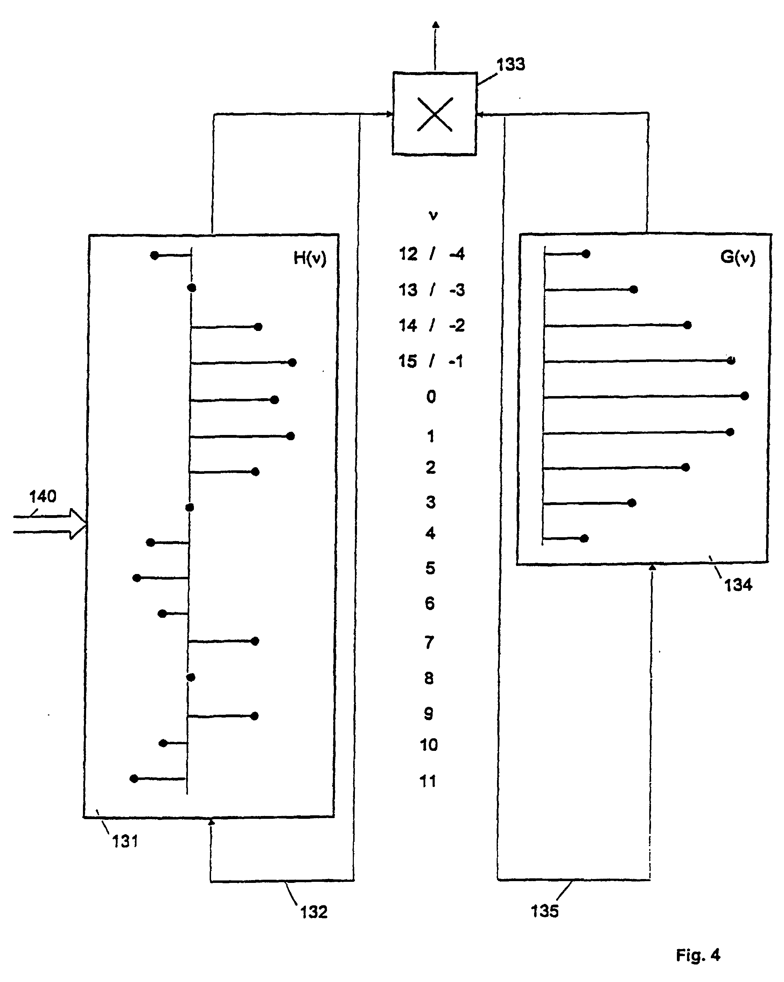

gilt. Die **Fig. 4** zeigt dies beispielhaft für J=9. Man erkennt, daß der Wert G(-B), hier G(-4), vor Beginn des Faltungsvorgangs in der Ausgangszelle des Schieberegisters **134** steht. Nach dem parallelen Einlesen eines neuen Frequenzgangs H(v) über die Leitung **140** in das Schieberegister **131** ist dieser zunächst um ebenfalls B Werte des Index v zu verschieben, wobei B durch Gleichung (3) gegeben ist. Die **Fig. 4** zeigt auch dieses beispielhaft, für einen unrealistisch kleinen, aber anschaulichen Wert N=16, wobei zur Vereinfachung reelle Werte von H(v) angenommen wurden. H(v) ist (als Fouriertransformierte einer zeitdiskreten Impulsantwort) periodisch in v mit der Periode N, daher sind die in der **Fig. 4** nebeneinanderstehenden und durch Schrägstrich getrennten Werte von v beide gleichermaßen zutreffend. Die in der Fig. 4 dargestellte Verschiebung von H(v) ergibt sich, wenn das Schieberegister **131** zunächst N-B Schiebeschritte ausführt (bei stillstehendem Schieberegister **134** und ausgeschaltetem Multiplizierer **133**). Sodann wird der Speicher **137** gelöscht. Die nun an den Schieberegisterausgängen anstehenden Werte H(-B) und G(-B) werden vom Multiplizierer **133** multipliziert, der Addierer **136** addiert Null, so daß das Produkt unverändert in den Speicher **137** gelangt. Nun werden beide Schieberegister, **131** und **134,** einmal geschoben. Der Multiplizierer **133** bildet das Produkt $H(-B+1) \cdot G(-B+1)$. Dieses wird im Addierer **136** zum gespeicherten Produkt $H(-B) \cdot G(-B)$ addiert und die Summe im Speicher **137** aufbewahrt. In dieser Weise wird fortgefahren, bis J Teilprodukte $H(v) \cdot G(v)$ addiert und die Gesamtsumme im Speicher **137** eingespeichert ist. Nun steht am Ausgang des Speichers **137** der erste Wert des durch die Faltung modifizierten Frequenzgangs $\tilde{H}(0)$ an. Durch einmaliges Schieben des hier als Schieberegister ausgebildeten Speichers **130** wird dieser Wert im Schieberegister **130** eingespeichert. Multiplizierer **133** und Schieberegister **134** werden daraufhin angehalten, während das Schieberegister **131** N-J+1 weitere Schiebeschritte ausführt. Damit hat letzteres Register seit Beginn des Faltungsvorgangs N+1 Schiebeschritte durchgeführt, wodurch sich eine um einen Wert kleinere Verschiebung von H(v) als in Fig. **4** dargestellt ergibt, d.h. H(-B+1), hier H(-3), steht nun in der Ausgangszelle des Schieberegisters **131.** Wenn nachfolgend der Speicher **137** gelöscht wird und anschließend das Produkt $H(-B+1) \cdot G(-B)$ in den Speicher **137** eingespeichert wird, so ist dies der erste Schritt zur Berechnung des zweiten modifizierten Frequenzgangwerts $\tilde{H}(1)$. Wenn die Berechnung dieses Wertes vollendet ist, wird auch dieser Wert aus dem Speicher **137** in das Schieberegister **130** geschoben. In dieser Weise wird fortgefahren, bis schließlich N modifizierte Frequenzgangwerte H(v) im Schieberegister **130** stehen. Von dort können diese wiederholt parallel in die Multipliziereranordnung **120** übertragen werden, um die Merkmalsänderung bei den Eingangsdatenblöcken so zu bewirken, wie das oben bereits beschrieben wurde. Erst dann, wenn die Adaptationsstrategie **50** festlegt, daß eine neue Frequenzgangfunktion H(v) zur Anwendung kommen muß, wird die erfindungsgemäße Fensterung wieder aktiviert.

Bei der beispielhaften Anwendung eines gemäß der Fig. 3 realisierten Gerätes zur Dynamikkompression von Sprachsignalen zeigte es sich, daß ein solches Gerät klein, leicht und daher als experimentelle Hörhilfe gut tragbar realisiert werden kann, wenn die Parameter wie folgt spezifiziert werden: Eingangssignal-Abschnitt M=180; Anzahl neuer Werte in jedem Eingangssignal-Abschnitt: K=90; Ausbildung der Transformation als FFT der Länge N=256; Länge des Fensters G(v): J=9. Bei der Realisierung mit Hilfe des Assembler-Codes eines modernen schnellen Signalprozessors, z.B. des DSP56L002 der Motorola Semiconductor Ltd., erwies sich der Rechenaufwand des erfindungsgemäßen Gerätes (gemäß Fig. 3) gegenüber einem nach dem konventionellen Stand der Technik hergestellten und der Fig. 1 entsprechenden Gerät als nur geringfügig, nämlich um ca. 12% erhöht.

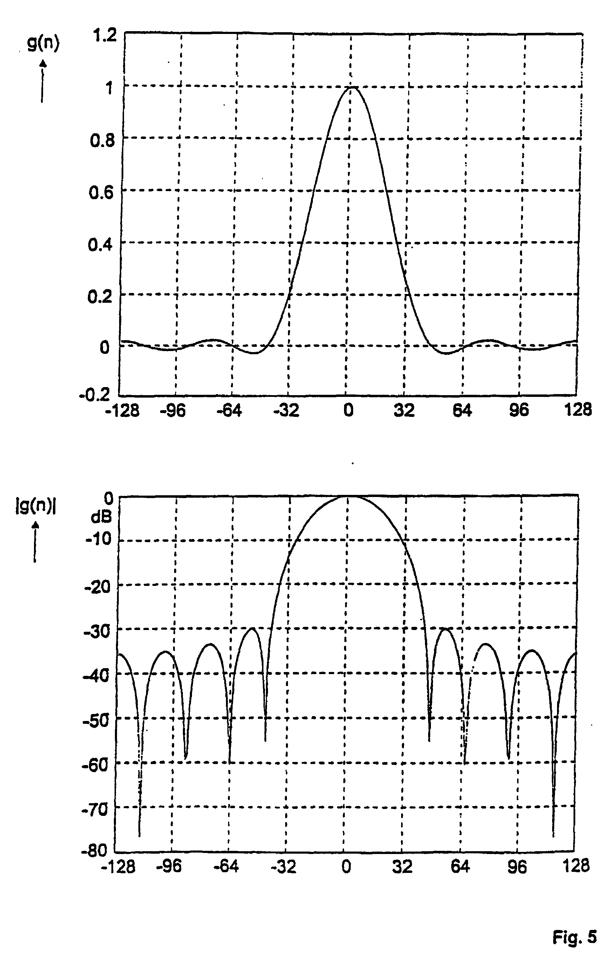

Aus theoretischen Abhandlungen, z.B. in "The digital prolate spheroidal window" von T. Verma, S. Bilbao und T.H.Y. Meng, erschienen in den Proceedings of the International Conference on Acoustics, Speech and Signal Processing (ICASSP) 1996, veranstaltet vom IEEE in Atlanta/USA, Seiten 1351-1354, konnte gefolgert werden, daß die geringsten verbleibenden "Time-domain-aliasing"-Fehler mit der "Prolate Spheroidal" Fensterfunktion erzielt werden könnten. In der **Fig. 4** ist im Schieberegistersymbol **134** eine solche Fensterfunktion G(v) mit der Länge J=9 dargestellt. Die **Fig. 5** zeigt die zugehörige Zeitbereichs-Fensterfunktion g(n), wie sie nach einer inversen FFT der Länge **256** erhalten wird. Gemäß dem Faltungssatz der Fouriertransformation (erläutert im genannten Buch von Oppenheim und Schafer) entspricht der Faltung des Frequenzgangs H(v) mit der Fensterfunktion G(v) im Zeitbereich die multiplikative Fensterbewertung von h(n), der zu H(v) gehörenden Impulsantwort, durch g(n). Die Fig. 5 zeigt, daß durch eine gemäß dem Patentanspruch 2 gewählte Fensterfunktion die Impulsantwort nicht exakt zeitbegrenzt gemacht werden kann. Jedoch werden die Werte der Impulsantwort, welche nicht im Bereich der Hauptkeule des Fensters g(n) gemäß Fig. 5 liegen, mit sehr kleinen Faktoren multipliziert und somit weitgehend unwirksam gemacht. Es zeigte sich daher, daß bereits mit der in **Fig. 4** dargestellten, sehr kurzen Fensterfunktion die "Time-domain-aliasing"-Fehler im Durchschnitt auf unter 1% derjenigen Fehler reduziert werden konnten, welche ein dem konventionellen Stand der Technik entsprechendes Gerät verursacht. Es ist facherfahrenen Personen aus der Literatur und der Erfahrung bekannt, daß eine Vergrößerung der Länge J des "Prolate Spheroidal" Fensters die Nebenkeulen des Zeitbereichsfensters g(n) weiter reduziert. Dadurch nehmen auch die "Time-domain-aliasing"-Fehler weiter ab. Allerdings erhöht sich mit J auch der Rechenaufwand, wie die obige Beschreibung des Faltungsvorgangs zeigt. Es kann somit leicht ein günstiger Kompromiß zwischen der Größe der verbleibenden Verarbeitungsfehler und dem Rechenaufwand gefunden werden.

## Patentansprüche

1. Verfahren zur Merkmalsänderung bei eindimensionalen, in eine digitale Darstellung umgewandelten Signalen unter Verwendung des adaptiven "Overlap-Add"-Algorithmus', welcher die Merkmalsänderung nach einer geeigneten diskreten Spektraltransformation durch Multiplikation im Frequenzbereich durchführt und anschließend das Ausgangssignal durch entsprechende inverse diskrete Spektraltransformation sowie durch überlappende und verschobene Addition mehrerer, von der inversen Spektraltransformation gelieferter Signalabschnitte erzeugt, **dadurch gekennzeichnet, daß** vor den Multiplikationen im Frequenzbereich die Frequenzgangfunktion mit einer wählbaren diskreten Fensterfunktion, welche erheblich geringere Länge aufweist als die Frequenzgangfunktion, gefaltet wird.

2. Verfahren nach Anspruch 1, **dadurch gekennzeichnet, daß** die Fensterfunktion im Frequenzbereich nur positive Werte und einen glatten Verlauf aufweist, im Zeitbereich aber eine ausgeprägte Struktur mit einer großen positiven Hauptkeule und alternierenden, dem Betrage nach kleinen Nebenmaxima und Nebenminima besitzt.

3. Verfahren nach Anspruch 1, **dadurch gekennzeichnet, daß** die Spektraltransformation als diskrete Fouriertransformation und die inverse Spektraltransformation als inverse diskrete Fouriertransformation ausbildbar ist.

4. Verfahren nach Anspruch 3, **dadurch gekennzeichnet, daß** die diskrete Fouriertransformation und die inverse diskrete Fouriertransformation mit Hilfe des Algorithmus' der "Fast Fourier Transform" (FFT) durchgeführt werden.

5. Verfahren nach Anspruch 1, **dadurch gekennzeichnet, daß** die Spektraltransformation als diskrete Cosinus-Transformation ("Cosine Transform") und die inverse Spektraltransformation als inverse diskrete Cosinus-Transformation ausgebildet ist.

6. Verfahren nach Anspruch 1, **dadurch gekennzeichnet, daß** die Spektraltransformation als diskrete Haar-Transformation und die inverse Spektraltransformation als inverse diskrete Haar-Transformation ausgebildet ist.

7. Verfahren nach Anspruch 1, **dadurch gekennzeichnet, daß** die Spektraltransformation als diskrete Walsh-Hadamard-Transformation und die inverse Spektraltransformation als inverse diskrete Walsh-Hadamard-Transformation ausgebildet ist.

8. Verfahren nach Anspruch 1, **dadurch gekennzeichnet, daß** die Spektraltransformation als diskrete Hartley-Transformation und die inverse Spektraltransformation als inverse diskrete Hartley-Transformation ausgebildet ist.

9. Verfahren nach Anspruch 2, **dadurch gekennzeichnet, daß** das Fenster, mit welchem die Frequenzgangfunktion gefaltet wird, durch Diskretisierung aus bekannten kontinuierlichen Fensterfunktionen gewonnen wird, wobei der ursprünglich für den Zeitbereich vorgesehene Verlauf im Frequenzbereich anwendbar ist.

10. Verfahren nach Anspruch 9, **dadurch gekennzeichnet, daß** das Fenster, mit welchem die Frequenzgangfunktion gefaltet wird, vor Beginn der Verarbeitung berechnet und abgespeichert wird.

11. Verfahren nach Anspruch 9, **dadurch gekennzeichnet, daß** das Fenster, mit welchem die Frequenzgangfunktion gefaltet wird, bei jeder Verarbeitung eines Blocks von N Spektralwerten neu berechnet wird.

12. Verfahren nach Ansgruch 2, **dadurch gekennzeichnet, daß** das Fenster, mit welchem die Frequenzgangfunktion gefaltet wird, die Diskretisierung einer "Prolate Spheroidal Window" Funktion darstellt, wobei der ursprünglich für den Zeitbereich vorgesehene Verlauf im Frequenzbereich anwendbar ist.

13. Verfahren nach Anspruch 2, **dadurch gekennzeichnet, daß** das Fenster, mit welchem die Frequenzgangfunktion gefaltet wird, während der Verarbeitung veränderbar ist, in Abhängigkeit von einer aus dem Ausgangssignal gewonnenen Fehlerinformation.

14. Gerät zur Durchführung des Verfahrens nach einem oder mehreren der Ansprüche 1 bis 13, **gekennzeichnet durch** wenigstens zwei Schieberegister (131, 134), einen Multiplizierer (133), einen Addierer (136) und einen Speicher (137), die zu einem nicht rekursiven, digitalen Filter miteinander verschaltet sind.

15. Gerät zur Durchführung des Verfahrens nach einem oder mehreren der Ansprüche 1 bis 13, **dadurch gekennzeichnet, dass** das Verfahren als Folge von Mikroprogrammwörtern dargestellt wird, welche in einem Mikroprogramm-Steuerwerk anwendbar ist.

16. Gerät zur Durchführung des Verfahrens nach einem oder mehreren der Ansprüche 1 bis 13, **dadurch gekennzeichnet, dass** das Verfahren als eine Folge von Assemblerbefehlen dargestellt wird, welche auf einem Mikrocomputer oder einem spezialisierten Signalprozessor ausführbar ist.

17. Gerät nach Anspruch 16, **dadurch gekennzeichnet, dass** die Folge von Assemblerbefehlen durch ein Compilerprogramm erzeugt wird, welches die dazu benötigte Information einem in einer höheren Programmiersprache geschriebenen Programm entnimmt.

## Claims

1. Method for feature modification given one-dimensional signals converted into a digital representation upon employment of the adaptive overlap-add algorithm, which implements the feature modification after a suitable, discrete spectral transformation by multiplication in the frequency domain and subsequently generates the output signal by corresponding, inverse, discrete spectral transformation as well as by overlapping and shifted addition of a plurality of signal segments supplied by the inverse spectral transformation, **characterised in that** before the multiplications in the frequency domain, the frequency response function is convoluted with a selectable, discrete window function that exhibits a considerably shorter length than the frequency response function.

2. Method according to Claim 1, **characterised in that** the window function comprises only positive values and a smooth curve in the frequency domain but comprises a pronounced structure in the time domain with a large, positive principal lobe and secondary maximums and secondary minimums that are small in terms of amount.

3. Method according to Claim 1, **characterised in that** the spectral transformation can be fashioned as discrete Fourier transformation and the inverse spectral transformation can be fashioned as inverse discrete Fourier transformation.

4. Method according to Claim 3, **characterised in that** the discrete Fourier transformation and the inverse discrete Fourier transformation are implemented with the assistance of the algorithm of fast Fourier transformation (FFT).

5. Method according to Claim 1, **characterised in that** the spectral transformation is fashioned as discrete cosine transformation (cosine transform) and the inverse spectral transformation is fashioned as inverse discrete cosine transformation.

6. Method according to Claim 1, **characterised in that** the spectral transformation is fashioned as discrete Haar transformation and the inverse spectral transformation is fashioned as inverse discrete Haar transformation.

7. Method according to Claim 1, **characterised in that** the spectral transformation is fashioned as discrete Walsh-Hadamard transformation and the inverse spectral transformation is fashioned as inverse discrete Walsh-Hadamard transformation.

8. Method according to Claim 1, **characterised in that** the spectral transformation is fashioned as discrete Hartley transformation and the inverse spectral transformation is fashioned as inverse discrete Hartley transformation.

9. Method according to Claim 2, **characterised in that** the window with which the frequency response function is convoluted is acquired by discretisation from known, continuous window functions, whereby the curve originally provided for the time domain can be applied in the frequency domain.

10. Method according to Claim 9, **characterised in that** the window with which the frequency response function is convoluted is calculated and stored before the beginning of the processing.

11. Method according to Claim 9, **characterised in that** the window with which the frequency response function is convoluted is recalculated each time a block of N spectral values is processed.

12. Method according to Claim 2, **characterised in that** the window with which the frequency response function is convoluted represents the discretisation of a prolate spheroidal window function, whereby the curve originally provided for the time domain can be applied in the frequency domain.

13. Method according to Claim 2, **characterised in that** the window with which the frequency response function is convoluted can be modified during the processing dependent on an error information acquired from the output signal.

14. Device for the implementation of the method according to one or more of Claims 1 to 13, **characterised by** at least two shift registers (131, 134), one multiplier (133), one adder (136) and one memory (137) are connected together to form a non-recursive, digital filter.

15. Device for the implementation of the method according to one or more of Claims 1 to 13, **characterised in that** the method is represented as a sequence of microprogram words that can be applied in a microprogram control unit.

16. Device for the implementation of the method according to one or more of Claims 1 to 13, **characterised in that** the method is represented as a sequence of assembler commands that can be implemented on a microcomputer or on a specialised signal processor.

17. Device according to Claim 16, **characterised in that** the sequence of assembler commands is generated by a compiler program that takes the information required therefor from a program written in a higher programming language.


**Revendications**

1. Procédé pour la modification de caractéristiques pour des signaux à une dimension transformés en une représentation numérique, en utilisant l'algorithme adaptatif "Overlap-Add" qui met en oeuvre la modification de caractéristiques selon une transformation spectrale discrète appropriée par multiplication dans le domaine fréquentiel et qui produit ensuite le signal de sortie par transformation spectrale discrète inverse correspondante ainsi que par addition avec chevauchement et décalage de plusieurs parties de signaux fournies par la transformation spectrale inverse, **caractérisé par le fait que**, avant les multiplications dans le domaine fréquentiel, on effectue une convolution de la fonction de réponse fréquentielle avec une fonction à fenêtre discrète qui peut être choisie et qui a une bien plus petite longueur que la fonction de réponse fréquentielle.

2. Procédé selon la revendication 1, **caractérisé par le fait que** la fonction à fenêtre n'a dans le domaine fréquentiel que des valeurs positives et une allure lisse mais dans le domaine temporel une structure marquée avec un grand lobe principal positif et des maxima et minima secondaires alternés et petits en valeur absolue.

3. Procédé selon la revendication 1, **caractérisé par le fait que** la transformation spectrale peut être conçue comme une transformation de Fourier discrète et la transformation spectrale inverse comme une transformation de Fourier discrète inverse.

4. Procédé selon la revendication 3, **caractérisé par le fait qu'**on effectue la transformation de Fourier discrète et la transformation de Fourier discrète inverse à l'aide de l'algorithme de la transformée de Fourier rapide "Fast Fourier Transform" (FFT).

5. Procédé selon la revendication 1, **caractérisé par le fait que** la transformation spectrale est conçue comme une transformation de cosinus discrète ("Cosine Transform") et la transformation spectrale inverse comme une transformation de cosinus discrète inverse.

6. Procédé selon la revendication 1, **caractérisé par le fait que** la transformation spectrale est conçue comme une transformation de Haar discrète et la transformation spectrale inverse comme une transformation de Haar discrète inverse.

7. Procédé selon la revendication 1, **caractérisé par le fait que** la transformation spectrale est conçue comme une transformation de Walsh-Hadamard discrète et la transformation spectrale inverse comme une transformation de Walsh-Hadamard discrète inverse.

8. Procédé selon la revendication 1, **caractérisé par le fait que** la transformation spectrale est conçue comme une transformation de Hartley discrète et la transformation spectrale inverse comme une transformation de Hartley discrète inverse.

9. Procédé selon la revendication 2, **caractérisé par le fait qu'**on obtient la fenêtre, avec laquelle on effectue une convolution de la fonction de réponse fréquentielle, en donnant une forme discrète à des fonctions à fenêtre continues connues, l'allure prévue initialement pour le domaine temporel étant applicable dans le domaine fréquentiel.

10. Procédé selon la revendication 2, **caractérisé par le fait qu'**on calcule et mémorise la fenêtre, avec laquelle on effectue une convolution de la fonction de réponse fréquentielle, avant le début du traitement.

11. Procédé selon la revendication 9, **caractérisé par le fait qu'**on calcule à nouveau la fenêtre, avec laquelle on effectue une convolution de la fonction de réponse fréquentielle, à chaque traitement d'un bloc de N valeurs spectrales.

12. Procédé selon la revendication 2, **caractérisé par le fait que** la fenêtre, avec laquelle on effectue une convolution de la fonction de réponse fréquentielle, représente la forme discrète d'une fonction "Prolate Spheroidal Window", l'allure prévue initialement pour le domaine temporel étant applicable dans le domaine fréquentiel.

13. Procédé selon la revendication 2, **caractérisé par le fait qu'**on peut modifier la fenêtre, avec laquelle on effectue une convolution de la fonction de réponse fréquentielle, pendant le traitement et en fonction d'une information d'erreur obtenue à partir du signal de sortie.

14. Appareil pour la mise en oeuvre du procédé selon l'une ou plusieurs des revendications 1 à 13, **caractérisé par** au moins deux registres à décalage (131, 134), un multiplicateur (133), un additionneur (136) et une mémoire (137) qui sont branchés ensemble en un filtre numérique non récursif.

15. Appareil pour la mise en oeuvre du procédé selon l'une ou plusieurs des revendications 1 à 13, **caractérisé par le fait que** le procédé est présenté comme une séquence de mots de microprogrammes qui peut être exécutée dans une unité de commande de microprogramme.

16. Appareil pour la mise en oeuvre du procédé selon l'une ou plusieurs des revendications **1** à **13, caractérisé par le fait que** le procédé est présenté comme une séquence d'instructions en assembleur qui peut être exécutée sur un micro-ordinateur ou sur un processeur de signal spécialisé.

17. Appareil selon la revendication 16, **caractérisé par le fait que** la séquence d'instructions en assembleur est produite par un programme compilateur qui tire l'information nécessaire à cet effet d'un programme écrit dans un langage de programmation plus évolué.

Fig. 1

Fig. 2

11

Fig. 3

Fig. 4

Fig. 5

14